# EUROPEAN PATENT APPLICATION

(11) **EP 4 559 363 A1**
(43) Date of publication of application: **28.05.2025**
(21) Application number: 24192538.7
(22) Date of filing: 02.08.2024
(51) Int. Cl.: A47J 31/44, A47J 31/46

(54) **COFFEE MACHINE**

(30) Priority: 27.11.2023 CN 202311605540
(71) Applicant: Guangdong Midea Consumer Electric Manufacturing Co., Ltd., Foshan, Guangdong 528311 (CN)
(72) Inventor: YANG, Liubin, Foshan (CN); PEI, Shengzhao, Foshan (CN); GU, Liang, Foshan (CN); XU, Yao, Foshan (CN); ZHANG, Wenjie, Foshan (CN); ZHANG, Suling, Foshan (CN); MA, Xiangyang, Foshan (CN)
(74) Representative: Ran, Handong

(57) **Abstract**

Disclosed is a coffee machine. The coffee machine includes a water tank (11), a liquid level stabilization module (20), a brewing module (30), a pipeline (41) and a heat element (42), wherein the water tank (11) is provided with a water tank outlet (10); the liquid level stabilization module (20) includes a shell (21) and a float assembly (24), and the shell (21) is arranged at the water tank outlet (10), and is provided with a first outlet (211) and a second outlet (212); the second outlet (212) is communicated with the external environment, and the float assembly (24) is used to open or close the water tank outlet (10); the pipeline (41) is communicated with the first outlet (211) and the brewing module (30); the heat element (42) is arranged in the pipeline (41). The technical solution of the present application can facilitate the outflow of water in the water tank (11), and at the same time ensure the stability of the flow rate of water in the pipeline (41).

## Description

### TECHNICAL FIELD

The present application relates to the technical field of coffee machines, in particular to a coffee machine.

### BACKGROUND

As people's living standards improve, people have also put forward higher requirements for the quality of coffee. Generally speaking, when brewage coffee with a coffee machine, if the water temperature can be controlled between 92°C and 95°C, the brewed coffee tastes better.

Currently used coffee machines generally include a main body, a water tank, and a heating tube arranged in the main body. The heating tube adopts a U-shaped tube or a horseshoe tube, which makes the traditional coffee machine have a fast flow rate in the first stage of the water boiling process and a slow flow rate in the latter stage. Without adding a water pump, the water output and water temperature of the coffee machine cannot meet the European coffee brewing center (ECBC) standard, and it is easy to cause the brewed coffee to have a poor taste.

### SUMMARY

The main purpose of the present application is to provide a coffee machine, aiming to facilitate the outflow of water in the water tank and meanwhile ensure the stability of the flow rate of water in the pipeline.

To achieve the above purpose, the coffee machine proposed by the present application includes:
a water tank provided with a water tank outlet;
a liquid level stabilization module including a shell and a float assembly; the shell is arranged at the water tank outlet and provided with a first outlet and a second outlet; the second outlet is communicated with an external environment, and the float assembly is configured to open or close the water tank outlet;
a brewing module and a pipeline; the pipeline is connected with the first outlet and the brewing module; and
a heat element arranged in the pipeline.

In an embodiment, the float assembly includes a float body, and the float body is arranged in the shell; under an action of buoyancy, the float body has a first state of being close to the water tank outlet and blocking the water tank outlet, and a second state of being away from the water tank outlet and opening the water tank outlet.

In an embodiment, a guide structure is arranged in the shell to limit a movement trajectory of the float body.

In an embodiment, the guide structure is configured as a plurality of limit ribs, and each of the limit ribs is arranged at intervals around an axis of the water tank outlet and configured to enclose and form a limit cavity for the float body to float.

In an embodiment, in a direction perpendicular to the axis of the water tank outlet, a gap width d between an outer surface of the float body and a cavity wall of the limit cavity satisfies: d is greater than or equal to 0.6mm and d is less than or equal to 1.5mm.

In an embodiment, a maximum buoyancy value of the float body is 2 to 5 times a deadweight of the float body; and/or
a ratio between a cross-segmental area of the shell and a cross-segmental area of the float body is s, and s is greater than or equal to 1.2 and s is less than or equal to 3.

In an embodiment, the float assembly further includes a seal configured as a first seal connected to a surface of the float body facing the water tank outlet, so as to seal the water tank outlet under the drive of the float body; and/or
the float assembly further includes a seal configured as a second seal connected to an edge of the water tank outlet, and in response to that the float body blocks the water tank outlet, the second seal and the float body are pressed relative to each other.

In an embodiment, the seal is a silicone member.

In an embodiment, an outer surface of the float body is provided with at least one groove or protrusion; and/or
a cross-segmental shape of the float body is circular, rectangular or triangular.

In an embodiment, the coffee machine further includes:
a water shortage detection device provided on the water tank and/or the liquid level stabilization module.

In an embodiment, the water shortage detection device includes a detected member and a detector; the detected member is connected to the float assembly, and the detector is connected to the shell to feed back a position of the detected member in the shell.

In an embodiment, the float assembly includes a float body, and the float body is arranged in the shell; under an action of buoyancy, the float body has a first state of being close to the water tank outlet and blocking the water tank outlet, and a second state of being away from the water tank outlet and opening the water tank outlet;

the detected member is configured as a magnet arranged on the float body, and the detector is configured as a reed switch or a Hall sensor.

In an embodiment, the water tank is provided with an avoidance groove for avoiding the pipeline; and/or
a liquid level in the liquid level stabilization module is higher than an upper end of the heat element; and/or
the second outlet is located above the first outlet.

In an embodiment, the coffee machine further includes:
a one-way valve arranged in the pipeline and located between the liquid level stabilization module and the heat element; a conduction direction of the one-way valve is configured to be a direction from the liquid level stabilization module to the pipeline.

In an embodiment, the pipeline is provided with a pipeline portion where internal liquid flows upward, and the heat element is at least arranged on the pipeline portion.

In an embodiment, the heat element is arranged in an L shape.

The technical solution of the present application is to set a liquid level stabilization module between the water tank and the pipeline, and utilize the communication between the liquid level stabilization module, the water tank and the pipeline to make the water in the water tank flow through the shell and flow into the pipeline. Since a float assembly is arranged in the shell, the float assembly can float up and down with the rise and fall of the liquid level in the shell. When the float assembly floats up with the rise of the liquid level, the float assembly can seal the water tank outlet and close the water tank outlet, so that the liquid level in the pipeline and the liquid level in the shell are maintained at the same horizontal plane, effectively prolonging the residence time of the water in the pipeline, so that the water flow corresponding to the heat element can be fully heated by the heat emitted by the heat element in the pipeline. It is ensured that the temperature of the water flowing into the brewing module reaches between 92°C and 95°C, and the brewed coffee tastes better.

When the water in the pipeline flows into the brewing module, the float assembly falls with the drop of the liquid level, and the water tank outlet is opened. Then, the water in the water tank can be replenished into the liquid level stabilization module, so that the float assembly rises again and reseals the water tank outlet. This cycle is repeated, and the liquid level in the pipeline is always maintained at the same level as the liquid level in the shell, effectively prolonging the residence time of the water flow in the pipeline, while facilitating the outflow of the water in the water tank, improving the stability of the water flow rate in the pipeline, and ensuring sufficient heating of the water flow.

### BRIEF DESCRIPTION OF THE DRAWINGS

In order to more clearly illustrate the technical solutions in the embodiments of the present application, the drawings needed to be used in the description of the embodiments will be briefly introduced below. Obviously, the drawings in the following description are only some embodiments of the present application. For those skilled in the art, other drawings can also be obtained based on these drawings without exerting creative efforts.
FIG. 1 is a structural schematic view of a coffee machine according to an embodiment of the present application.
FIG. 2 is a schematic view of a liquid flow direction of the coffee machine in FIG. 1.
FIG. 3 is a cross-segmental view of the coffee machine in FIG. 1 from a first perspective.
FIG. 4 is a partial enlarged view of A in FIG. 3.
FIG. 5 is a cross-segmental view of the coffee machine in FIG. 1 from a second perspective.
FIG. 6 is a partial enlarged view of B in FIG. 5.
FIG. 7 is an exploded schematic view of a water tank module and a liquid level stabilization module.
FIG. 8 is a cross-segmental view of a water shortage detection device according to an embodiment of the present application.

### Description of reference signs:

| reference sign | name | reference sign | name |
|---|---|---|---|
| 10 | water tank module | 31 | powder bin |
| 11 | water tank | 32 | shower head |
| 111 | water tank outlet | 40 | heat module |
| 112 | avoidance groove | 41 | pipeline |
| 20 | liquid level stabilization module | 411 | first pipe segment |
| 21 | shell | 412 | second pipe segment |
| 211 | first outlet | 413 | third pipe segment |
| 212 | second outlet | 42 | heat element |
| 22 | guide structure | 421 | first heat element |
| 221 | limit rib | 422 | second heat element |
| 222 | water gap | 50 | liquid receiving module |
| 24 | float assembly | 60 | heat preservation module |
| 241 | float body | 70 | water shortage detection device |
| 242 | groove | 71 | detected member |
| 243 | first seal | 72 | detector |
| 30 | brewing module | | |

The realization of the purpose, functional features and advantages of the present application will be further explained in conjunction with embodiments and with reference to the accompanying drawings.

### DETAILED DESCRIPTION OF THE EMBODIMENTS

The following will be combined with the drawings in the embodiments of the present application to clearly and completely describe the technical solutions in the embodiments of the present application. Obviously, the described embodiments are only part of the embodiments of the present application, not all of the embodiments. Based on the embodiments in the present application, all other embodiments obtained by those skilled in the art without creative work belong to the protection scope of the present application.

In the present application, unless otherwise clearly specified and limited, the terms "connection", "fixation", etc. should be understood in a broad sense. For example, "fixation" can be a fixed connection, a detachable connection, or an integral body; it can be a mechanical connection or an electrical connection; it can be directly connected or indirectly connected through an intermediate medium; it can be the internal connection of two elements or the interaction relationship between two elements, unless otherwise clearly defined. For those skilled in the art, the specific meanings of the above terms in the present application can be understood according to the specific circumstances.

It should be noted that if there are directional indications (such as up, down, left, right, front, back...) involved in the embodiments of the present application, the directional indication is only used to explain the relative position relationship, movement, etc. between the components under a certain posture (as shown in the drawings). If the specific posture changes, the directional indication will also change accordingly.

In addition, if there are descriptions involving "first", "second", etc. in the embodiments of the present application, the descriptions of "first", "second", etc. are only for descriptive purposes and cannot be understood as indicating or implying their relative importance or implicitly indicating the number of technical features indicated. Therefore, the features defined as "first" and "second" may explicitly or implicitly include at least one of the features. In addition, the meaning of "and/or" appearing in the full text is that it includes three parallel solutions, taking "A and/or B as an example", including solution A, or solution B, or solutions that satisfy both A and B. In addition, the technical solutions between the various embodiments can be combined with each other, but they must be based on the ability of those skilled in the art to implement them. When the combination of technical solutions is contradictory or cannot be implemented, it should be considered that such a combination of technical solutions does not exist and is not within the protection scope required by the present application.

The present application proposes a coffee machine.

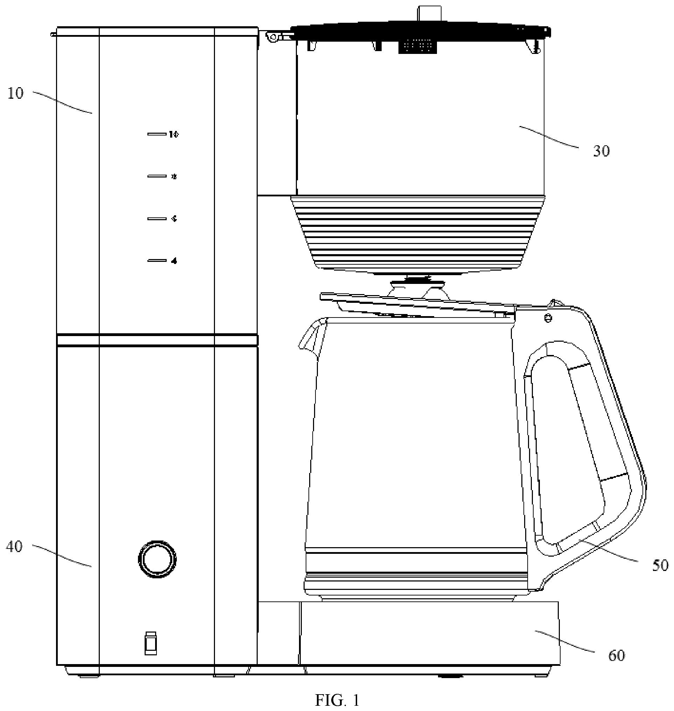

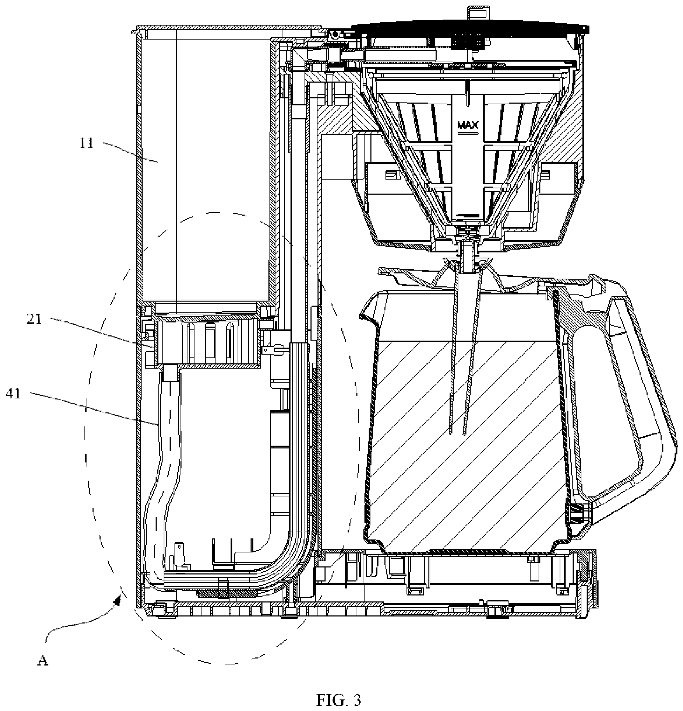

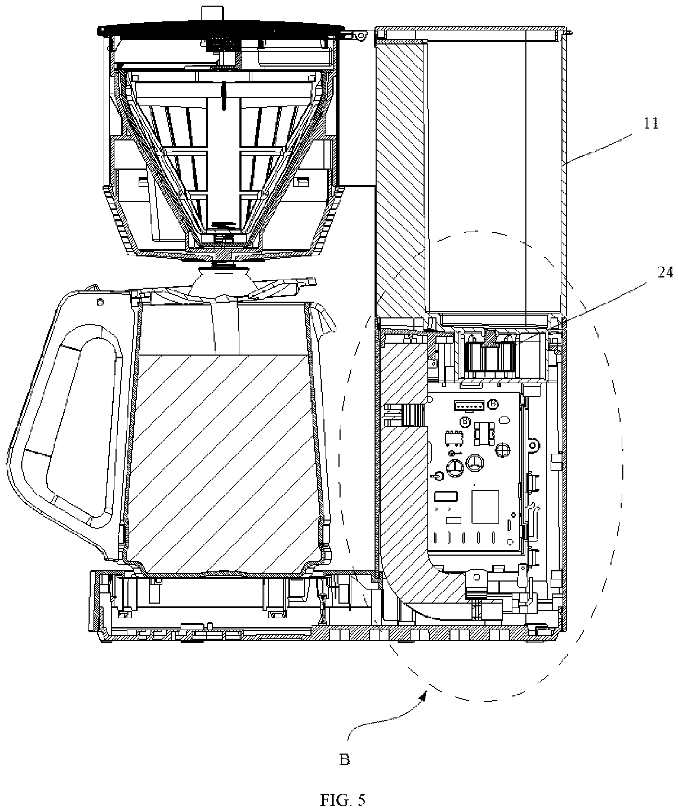

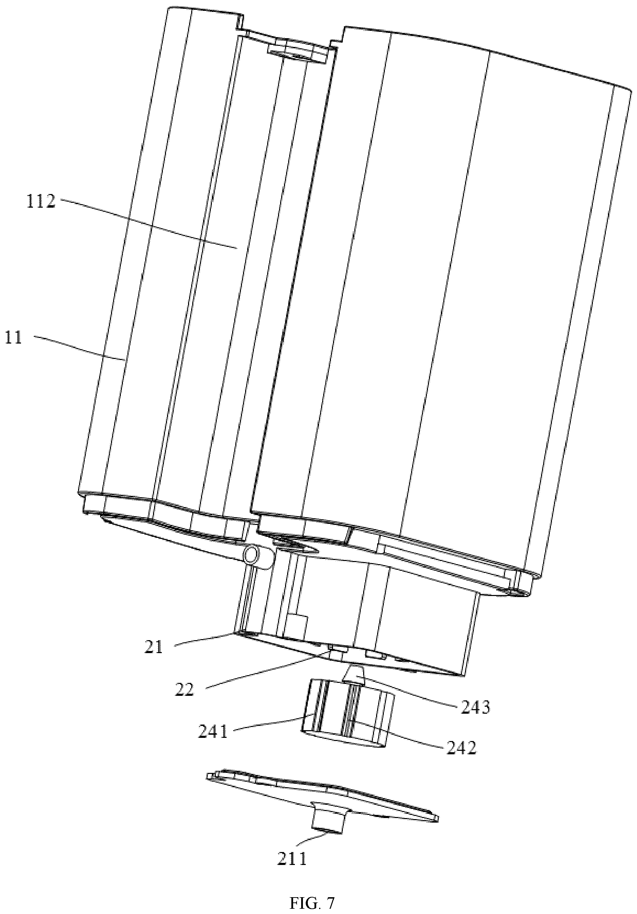

Referring to FIGS. 1 to 7, in an embodiment of the present application, the coffee machine includes a water tank 11, a liquid level stabilization module 20, a brewing module 30, a pipeline 41 and a first heat element 421. The water tank 11 is provided with a water tank outlet 111; the liquid level stabilization module 20 includes a shell 21 and a float assembly 24. The shell 21 is provided at the water tank outlet 111 and is provided with a first outlet 211 and a second outlet 212. The second outlet 212 is connected to the external environment. The float assembly 24 is used to open or close the water tank outlet 111; the pipeline 41 is communicated to the first outlet 211 and the brewing module 30; the heat element 42 is provided in the pipeline 41, so that the water in the water tank 11 can be easily discharged and the flow rate stability of the water in the pipeline 41 can be ensured.

The coffee machine includes a water tank module 10, a liquid level stabilization module 20, a heat module 40, a brewing module 30, a liquid receiving module 50 and a heat preservation module 60; the liquid level stabilization module 20 is connected between the water tank module 10 and the heat module 40, that is, the shell 21 is connected to the water tank 11 and the pipeline 41; the brewing module 30 is connected to the heat module 40, that is, the shower head 32 of the brewing module 30 is connected to the pipeline 41, so that the water in the water tank 11 flows through the shell 21 and the pipeline 41, and is sprayed out by the shower head 32. In this process, the water flow is heated by the heat element 42 to ensure that the hot water flows into the powder bin 31 of the brewing module 30 and mixes with the coffee powder in the powder bin 31; and the brewed coffee flows into the liquid receiving module 50, such as a coffee cup; the heat preservation module 60 is arranged below the liquid receiving module 50 to maintain the temperature of the coffee in the liquid receiving module 50 and ensure the coffee quality.

The present application sets a liquid level stabilization module 20 between the water tank 11 and the pipeline 41, and utilizes the connection between the liquid level stabilization module 20 and the water tank 11 to allow the water in the water tank 11 to flow into the shell 21. Since a float assembly 24 is provided in the shell 21, the float assembly 24 can float up and down with the rise and fall of the liquid level in the shell 21; the float assembly 24 floats up with the rise of the liquid level, and thus the water tank outlet 111 can be sealed and the water tank outlet 111 can be closed. At this time, since the shell 21 is connected to the external environment through the second outlet 212, the pipeline 41 is connected to the shower head 32 of the brewing module 30, and the shower head 32 is connected to the external environment. Therefore, the liquid level in the pipeline 41 is maintained at the same horizontal plane as the liquid level in the shell 21, thereby effectively extending the residence time of the water in the pipeline 41, and facilitating the water flow corresponding to the heat element 42 to be fully heated by the heat emitted by the heat element 42 in the pipeline 41, thereby ensuring that the water temperature of the water flowing into the powder bin 3 reaches between 92°C and 95°C, and ensuring that the brewed coffee tastes better; after heating for a certain period of time, the water in the pipeline 41 is heated to generate steam pressure; and then the water in the pipeline 41 flows to the powder bin 31 of the brewing module 30 under the action of steam pressure; the liquid level in the pipeline 41 decreases, and the liquid level in the shell 21 decreases accordingly, causing the float assembly 24 to fall with the decrease of the liquid level, and then opening the water tank outlet 111; and then the water in the water tank 11 can be replenished into the liquid level stabilization module 20, prompting the float assembly 24 to rise again and reseal the water tank outlet 111; and the cycle is repeated, the liquid level in the pipeline 41 is always maintained at the same level as the liquid level in the shell 21, effectively extending the residence time of the water flow in the pipeline 41; while facilitating the outflow of the water in the water tank 11, improving the flow rate stability of the water flow in the pipeline 41, and ensuring sufficient heating of the water flow.

The heat element 42 is arranged in the pipeline 41. It can be understood that the heat element 42 can be wrapped around the outer peripheral surface of the pipeline 41 or arranged on the inner wall surface of the pipeline 41, and both can make the liquid in the pipeline 41 corresponding to the heat element 42 be fully heated to achieve the purpose of heating.

In addition, the liquid level in the shell 21 can be adjusted by designing the buoyancy of the float assembly 24 to adjust the liquid level position of the liquid level stabilization module 20, and then adjust the liquid level of the water in the pipeline 41 and the setting height of the heat element 42 on the pipeline 41, so as to ensure that the water flow in the pipeline 41 can be effectively heated to avoid dry burning. Before being subjected to steam pressure, the water flow in the pipeline 41 needs to have a certain distance from the shower head 32 of the brewing module 30 to avoid the distance being too short, resulting in the temperature of the water flow flowing out of the shower head 32 being too high, thereby affecting the quality of the brewed coffee.

The technical solution of the present application is to set a liquid level stabilization module 20 between the water tank 11 and the pipeline 41, and utilize the communication between the liquid level stabilization module 20, the water tank 11 and the pipeline 41 to make the water in the water tank 11 flow through the shell 21 and flow into the pipeline 41. Since a float assembly 24 is provided in the shell 21, the float assembly 24 can float up and down with the rise and fall of the liquid level in the shell 21. When the float assembly 24 floats up with the rise of the liquid level, the float assembly 24 can seal the water tank outlet 111 and close the water tank outlet 111, so that the liquid level in the pipeline 41 and the liquid level in the shell 21 are maintained at the same horizontal plane, effectively prolonging the residence time of the water in the pipeline 41. The water flow corresponding to the heat element 42 can be fully heated by the heat element 42 in the pipeline 41 to ensure that the water temperature of the water flowing into the powder bin 31 reaches between 92°C and 95°C, ensuring that the brewed coffee tastes better.

When the water in the pipeline 41 flows into the brewing module 30, the float assembly 24 falls with the drop of the liquid level, and the water tank outlet 111 is opened; and then the water in the water tank 11 can be replenished into the liquid level stabilization module 20, so that the float assembly 24 rises again and reseals the water tank outlet 111. This cycle is repeated, and the liquid level in the pipeline 41 is always maintained at the same level as the liquid level in the shell 21, effectively extending the residence time of the water flow in the pipeline 41, while facilitating the outflow of the water in the water tank 11, improving the flow rate stability of the water flow in the pipeline 41, and ensuring sufficient heating of the water flow.

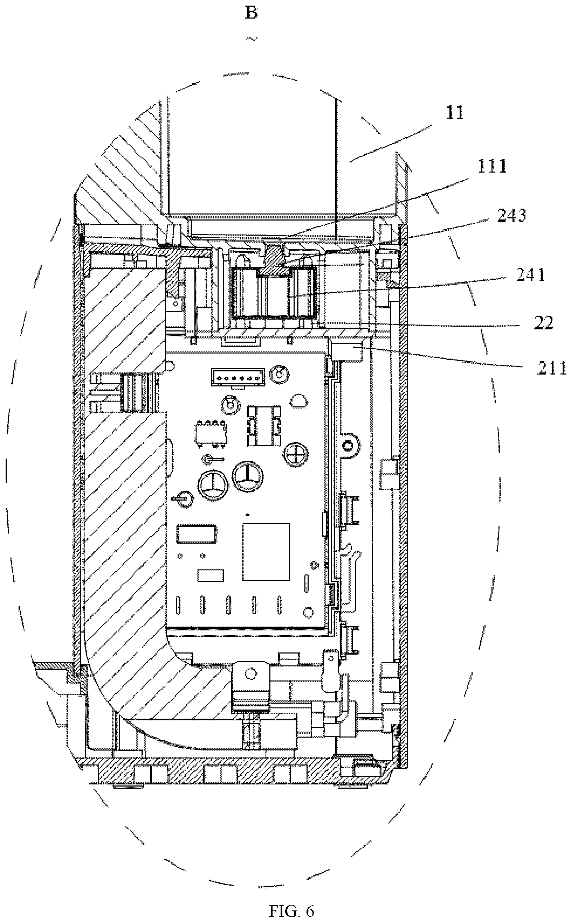

Referring to FIGS. 6 to 8, in an embodiment, the float assembly 24 includes a float body 241, which is disposed in the shell 21. Under the action of buoyancy, the float body 241 has a first state of being close to the water tank outlet 111 and blocking the water tank outlet 111, and a second state of being away from the water tank outlet 111 and opening the water tank outlet 111. It can be understood that when the water in the water tank 11 flows into the shell 21 through the water tank outlet 111 and the liquid level in the shell 21 gradually rises, the float body 241 rises with the rise of the liquid level; and when the liquid level rises to a certain height, the float body 241 is aligned with the water tank outlet 111 and blocks the water tank outlet 111 and is in the first state. At this time, the liquid level in the shell 21 is in a stable state. At the same time, the liquid level in the pipeline 41 is aligned with the liquid level in the shell 21; when the water flow in the pipeline 41 is heated, the steam pressure generated causes the water flow in the pipeline 41 to at least partially flow into the powder bin 31 in the brewing module 30. Due to the change in pressure in the pipeline 41 and the reduction in water volume, the water in the liquid level stabilization module 20 flows into the pipeline 41, and the liquid level in the shell 21 decreases. The float body 241 will fall with the decrease in the liquid level. When falling away from the water tank outlet 111, the float body 241 no longer blocks the water tank outlet 111 and is in the second state. At this time, the water in the water tank 11 flows into the shell 21, and the liquid level will rise, and drive the float body 241 to reseal the water tank outlet 111. The first state and the second state are switched repeatedly in a cycle, thereby reliably ensuring that the liquid level in the pipeline 41 is always at a constant height, thereby ensuring the retention time of the water flow in the pipeline 41.

The buoyancy of the float body 241 can be designed according to the selection of the liquid level position in the shell 21, thereby changing the liquid level of the water flow in the pipeline 41, thereby determining the setting height of the heat element 42 in the pipeline 41.

In an embodiment, a guide structure 22 is provided in the shell 21 to limit the movement trajectory of the float body 241. The guide structure 22 is connected to the wall of the shell 21 and is arranged close to the water tank outlet 111; and then, by using the setting of the guide structure 22, the floating range of the float body 241 in the shell 21 is effectively limited; and under the action of buoyancy, the float body 241 can be guided by the guide structure 22, and quickly aligned with the water tank outlet 111, thereby improving the efficiency and accuracy of blocking the water tank outlet 111.

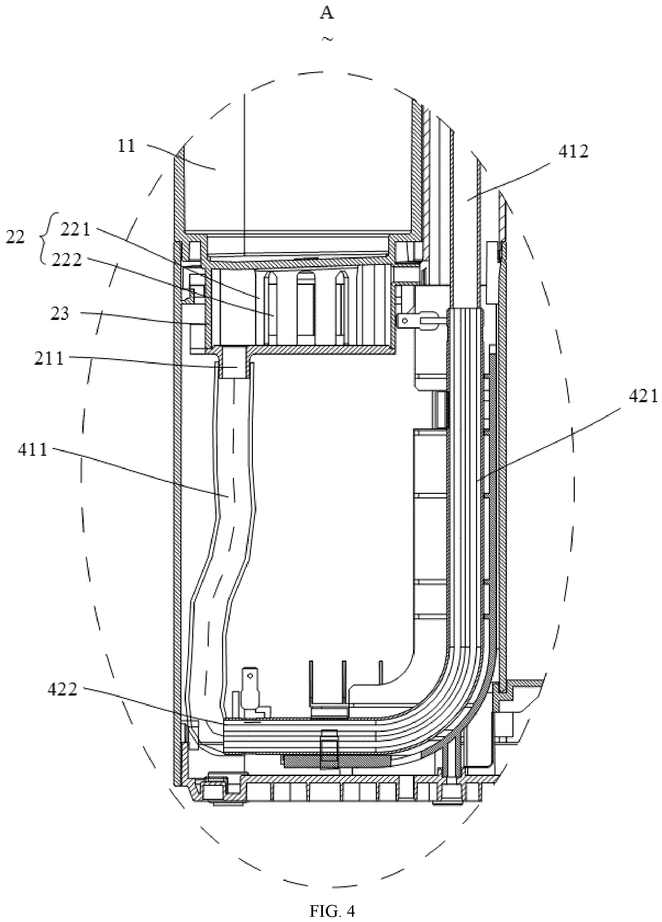

In an embodiment, in combination with FIGS. 4, 6 to 8, in an embodiment, the guide structure 22 is configured as a plurality of limit ribs 221, each of which is arranged at intervals around the axis of the water tank outlet 111, and encloses a limit cavity for the float body 241 to float. On the one hand, the limit cavity enclosed by the plurality of limit ribs 221 can effectively limit the floating range of the float body 241, preventing the float body 241 from moving with any position in the shell 21, resulting in the float body 241 being unable to efficiently align with the water tank outlet 111; on the other hand, each limit rib 221 is arranged at intervals to form a water gap 222, which facilitates the water flowing out of the water tank outlet 111 to flow into the shell 21, so as to increase the liquid level in the shell 21. However, in other embodiments, the guide structure 22 can be configured as a limit cylinder, which is provided with a plurality of water through holes, which can also play a limiting and guiding role, and facilitate the change of the liquid level in the shell 21.

One end of the limit rib 221 is connected to the edge of the water tank outlet 111, and the other end can be connected to the shell 21 or can be a free end. It only needs to ensure that the float body 241 cannot escape from the limit cavity surrounded by the limit ribs 221.

In an embodiment, in the axial direction perpendicular to the water tank outlet 111, the gap width d between the outer surface of the float body 241 and the cavity wall of the limit cavity satisfies: 0.6mm≤d≤1.5mm, so that the float body 241 can switch from the first state to the second state and from the second state to the first state smoothly. Specifically, when the gap width is less than 0.6mm, although the liquid level rises, the pressure on the float body 241 increases. Due to the small gap width, it is more difficult for the float body 241 to approach the water tank outlet 111, and it is easy to hit the limit rib 221. Although the liquid level drops, the pressure on the float body 241 decreases. Due to the small gap width, it is more difficult for the float body 241 to move away from the water tank outlet 111, and it is easy to be unable to break away from the water tank outlet 111 due to the large surface tension. When the gap width is greater than 1.5mm, although the liquid level rises, the pressure on the float body 241 increases. Due to the large gap width, the floating swing of the float body 241 is large, and it cannot quickly align with the water tank outlet 111, which easily reduces the efficiency of switching from the second state to the first state. Although the liquid level drops, the pressure on the float body 241 decreases. Due to the large gap width, the difficulty of the float body 241 away from the water tank outlet 111 also increases, and it is easy to be unable to leave the water tank outlet 111 due to the large surface tension. Therefore, the gap width between the outer surface of the float body 241 and the cavity wall of the limit cavity is limited to between 0.6mm and 1.5mm, which can reduce the possibility of the float body 241 hitting the limit rib 221. At the same time, it prevents the large surface tension from acting on the float body 241, improves the smoothness of the float body 241 switching from the first state to the second state, and from the second state to the first state, and improves the switching efficiency.

Among them, the specific value of the gap width between the outer surface of the float body 241 and the cavity wall of the limit cavity can be 0.6mm, 0.7mm, 0.8mm, 0.9mm, 1.0mm, 1.1mm, 1.2mm, 1.3mm, 1.4mm, 1.5mm, etc.

In an embodiment, the maximum buoyancy value of the float body 241 is 2 to 5 times the deadweight of the float body 241; the maximum buoyancy value refers to the buoyancy value generated when the float body 241 is completely immersed. When the buoyancy value of the float body 241 is too small, the immersion volume of the float body 241 is larger due to the heavier float body 241. Therefore, when the water shortage detection device 70 in the coffee machine connects the detected member 71 with the float body 241, it is easy to erroneously trigger the water shortage detection device 70 to work, thereby affecting the detection accuracy of the water shortage detection device 70. When the buoyancy value of the float body 241 is too large, the immersion volume of the float body 241 is smaller; and due to the excessive buoyancy, the float body 241 blocks the water tank outlet 111 after a small amount of water is added to the shell 21, which causes the liquid level in the shell 21 to always be at a low water level, which is easy to affect the drainage capacity of the liquid level stabilization module 20 and the number of times the float body 241 switches the water tank outlet 111. The water level in the shell 21 does not change significantly. Therefore, by limiting the maximum buoyancy value of the float body 241 to 2 to 5 times the weight of the float body 241, the reliability of the water shortage detection device 70 for detecting the coffee machine water shortage can be guaranteed, as well as the drainage capacity and water outlet stability of the liquid level stabilization module 20.

Among them, the ratio between the maximum buoyancy value of the float body 241 and the deadweight of the float body 241 can be 2, 2.1, 2.3, 2.5, 2.7, 2.9, 3, 3.2, 3.4, 3.6, 3.8, 4, 4.1, 4.3, 4.5, 4.7, 5, etc., preferably 2.7 times.

In an embodiment, the ratio between the cross-segmental area of the shell 21 and the cross-segmental area of the float body 241 is s, 1.2≤s≤3, to ensure that there is a large water space in the shell 21. At the same time, during the switching process between the first state and the second state, to ensure that the float body 241 can float and sink smoothly in the shell 21, improve the water discharge reliability of the liquid level stabilization module 20, and also facilitate the assembly of the detected member 71 on the float body 241 and the cooperation with the detector 72, thereby improving the detection accuracy of the water shortage detection device 70.

Among them, the specific ratio between the cross-segmental area of the shell 21 and the cross-segmental area of the float body 241 can be 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, etc., preferably 1.3.

In order to improve the sealing performance of the float body 241 blocking the water tank outlet 111, referring to FIGS. 6 to 8, in an embodiment, the float assembly 24 also includes a seal 243, which is configured as a first seal 243. The first seal 243 is connected to the surface of the float body 241 facing the water tank outlet 111, so as to seal the water tank outlet 111 under the drive of the float body 241. It can be understood that, as the liquid level in the shell 21 rises, the float body 241 floats up, and under the guidance of the guide structure 22, drives the first seal 243 to move toward the water tank outlet 111. When floating to a certain height, the first seal 243 covers the water tank outlet 111, or extends into the water tank outlet 111, thereby sealing the water tank outlet 111.

The surface of the float body 241 facing the water tank outlet 111 is provided with a slot for the seal 243 to be clamped. The seal 243 is installed in the slot and a reliable connection between the seal 243 and the float body 241 is achieved by means of interference fit, gluing, fasteners, etc.

In another embodiment, the float assembly 24 further includes a seal 243, which is configured as a second seal. The second seal is connected to the edge of the water tank outlet 111. When the float body 241 blocks the water tank outlet 111, the second seal is relatively squeezed with the float body 241. It can be understood that, as the liquid level in the shell 21 rises, the float body 241 floats toward the water tank outlet 111 under the guidance of the guide structure 22 and abuts against the edge of the water tank outlet 111. Since the water in the water tank 11 applies pressure to the second seal connected to the edge of the water tank outlet 111, the second seal is deformed and is relatively squeezed with the float body 241 to achieve sealing of the water tank outlet 111. The second seal is a sealing ring.

In another embodiment, the float assembly 24 includes a first seal 243 provided on the float body 241 and a second seal provided on the edge of the water tank outlet 111. As the liquid level in the shell 21 rises, the float body 241 floats up, and the first seal 243 extends into the second seal or the first seal 243 and the second seal are relatively squeezed, thereby achieving reliable sealing of the water tank outlet 111.

In an embodiment, the seal 243 is a silicone member, that is, made of food-grade silicone material, which is soft and elastic, and is conducive to sealing the water tank outlet 111.

Referring to FIGS. 6 to 8, in an embodiment, the outer surface of the float body 241 is provided with at least one groove 242 or protrusion, thereby changing the outer surface of the float body 241; and then when the float body 241 cooperates with the guide structure 22, it is beneficial to increasing the gap between the float body 241 and the cavity wall of the limit cavity to reduce the influence of tension; the groove 242 can be arranged along the height extension direction of the float body 241, that is, the axial extension direction of the water tank outlet 111; and a plurality of grooves 242 are provided at the same time, and they are evenly and spaced around the center line of the float body 241, so that the pressure of water on the float body 241 is evenly distributed on the outer surface of the float body 241, thereby reducing the floating swing of the float body 241 and improving the floating stability of the float body 241. Similarly, at least one protrusion is provided on the outer surface of the float body 241, and each protrusion is evenly and spaced around the center line of the float body 241, thereby changing the outer surface of the float body 241, balancing the force of the float body 241, reducing the floating swing of the float body 241, and at the same time improving the floating stability of the float body 241.

In addition, when the float body 241 moves on the axis of the first outlet 211, since the surface of the float body 241 facing the first outlet 211 is provided with a groove 241, the gap between the float body 241 and the edge of the first outlet 211 is increased, effectively reducing the influence of tension. In this way, when water is added to the shell 21, the float body 241 can be disconnected from the shell 21 with a small force when the liquid level rises, and then floats up with the rise of the liquid level.

In an embodiment, the cross-segmental shape of the float body 241 is circular, rectangular or triangular, that is, the float body 241 can be a sphere, a cylinder, a cone, etc. However, the present application is not limited thereto. In other embodiments, the cross-segmental shape of the float body 241 is an irregular shape.

In an embodiment, the coffee machine further includes a water shortage detection device 70, which is disposed in the water tank 11 and/or the liquid level stabilization module 20, so as to send out corresponding signals and warnings when the water tank 11 or the shell 21 is in a water shortage state, or when both the water tank 11 and the shell 21 are in a water shortage state, and cut off the power supply to the heat element 42 to prevent dry burning.

In an embodiment, the water shortage detection device can monitor the water level by means of a reed switch, capacitance detection, infrared detection, etc.

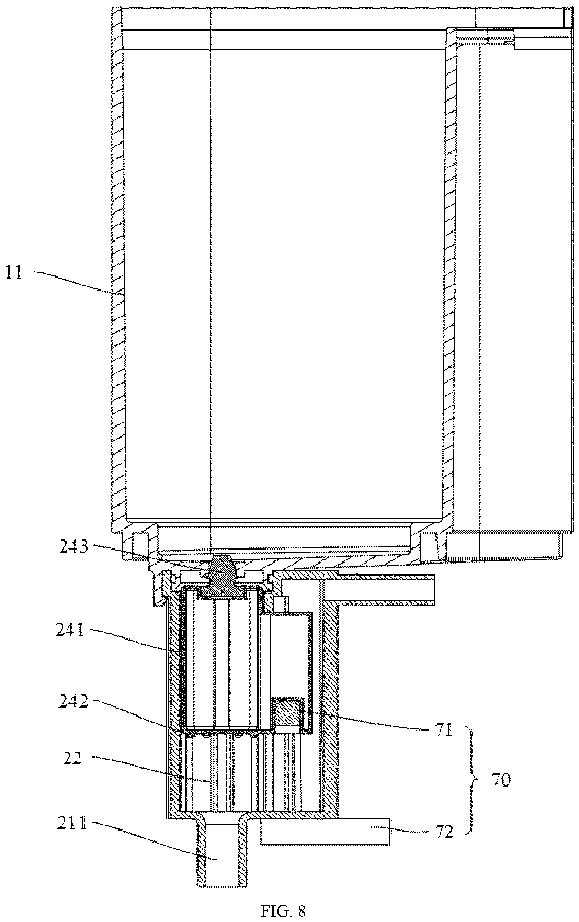

Furthermore, the water shortage detection device 70 is arranged in the liquid level stabilization module 20 to reduce the impact on the appearance of the water tank 11 and the risk of increased cost, and reasonably utilize the area near the water tank outlet 111, or reasonably utilize the specific structure of the liquid level stabilization module 20; as shown in FIG. 8, in an embodiment, the water shortage detection device 70 includes a detected member 71 and a detector 72. The detected member 71 is connected to the float assembly 24, and the detector 72 is connected to the shell 21, and is used to feedback the position of the detected member 71 in the shell 21. Specifically, the coffee machine also includes a controller, and the heating member 42 and the detector 72 are both connected to the controller. When the detector 72 detects the detected member 71, the controller receives the water shortage signal sent by the detector 72 and cuts off the power supply to the heating member 42, thereby reducing the risk of the heating member 42 heating the air in the pipeline 41.

By connecting the detected member 71 with the float assembly 24, that is, the detected member 71 and the float assembly 24 are integrated; on the one hand, it is convenient for the detected member 71 to float with the float assembly 24, thereby facilitating the detector 72 to monitor the position of the liquid surface; on the other hand, it can reduce the interference of the detected member 71 on the floating of the float assembly 24, thereby improving the detection effect of the detector and the control effect of the controller.

Referring to FIG. 8, in an embodiment, the float assembly 24 includes a float body 241. The float body 241 is disposed in the shell 21, and can, under the action of buoyancy, have a first state of being close to the water tank outlet 111 and blocking the water tank outlet 111, and a second state of being away from the water tank outlet 111 and opening the water tank outlet 111. The detected member 71 is configured as a magnet disposed on the float assembly 24, and the detector 72 is configured as a reed switch or a Hall sensor. It can be understood that, as shown in FIG. 8, taking the detector 72 as a reed switch as an example, the magnet is connected to the float body 241, the reed switch is connected to the outer surface of the shell 21, and is away from the water tank outlet 111. The water tank outlet 111 is arranged in such a manner; on the one hand, the float body 241 is in a first state by sealing the water tank outlet 111 through the connected seal 243 as the liquid level rises and under the guiding action of the guide structure 22, thereby realizing the sealing action of the float assembly 24 on the water tank outlet 111; on the other hand, due to the drop in the liquid level and the guiding action of the guide structure 22, the float body 241 is away from the water tank outlet 111; and in a water shortage state, when the float body 241 gradually approaches the reed switch, the connected magnet can cause the reed switch to be magnetically attracted, and then the reed switch can output a corresponding water shortage signal to the controller, thereby realizing the detection of the liquid level height in the shell 21 by the float assembly 24.

Moreover, since the magnet and the float body 241 are fixed as an integral structure, the magnet can be embedded in the float body 241, which can reliably reduce the occupation of the space in the shell 21 caused by the separate arrangement of the detection member 71 and the float body 241, and the interference with the floating of the float body 241. However, in other embodiments, the water shortage detection device 70 can be a photoelectric sensor.

In an embodiment, the water tank 11 is provided with an avoidance groove 112 for avoiding the pipeline 41, and the pipeline 41 is partially embedded in the avoidance groove 112, which helps to make the water tank module 10 and the heat module 40 compact; and at the same time, the appearance regularity and ornamental value of the water tank module 10 and the heat module 40 are improved.

In an embodiment, the liquid level in the liquid level stabilization module 20 is higher than the upper end of the heat element 42421. It can be understood that when the float assembly 24 closes the water tank outlet 111, the liquid level in the pipeline 41 and the liquid level in the shell 21 are maintained at the same level. The heat element 42 is arranged on the pipeline 41, and the liquid level in the shell 21 is higher than the upper end of the heat element 42, thereby ensuring that water flow is left in the pipe portion where the heat element 42 is arranged, effectively reducing the risk of dry burning, and improving the safety of the coffee machine.

In an embodiment, the second outlet 212 is located above the first outlet 211, ensuring the connection between the second outlet 212 and the external environment, and at the same time, preventing the water in the liquid level stabilization device 20 from flowing out of the second outlet 212.

In an embodiment, the coffee machine further includes a one-way valve (not shown), which is disposed in the pipeline 41 and is located between the liquid level stabilization module 20 and the heat element 42. The conduction direction of the one-way valve is configured to be from the liquid level stabilization module 20 toward the pipeline 41, so that the water in the liquid level stabilization module 20 flows into the pipeline 41 and is heated by the heat element 42, and can also prevent the water in the pipeline 41 from flowing back to the liquid level stabilization module 20 under the action of steam pressure.

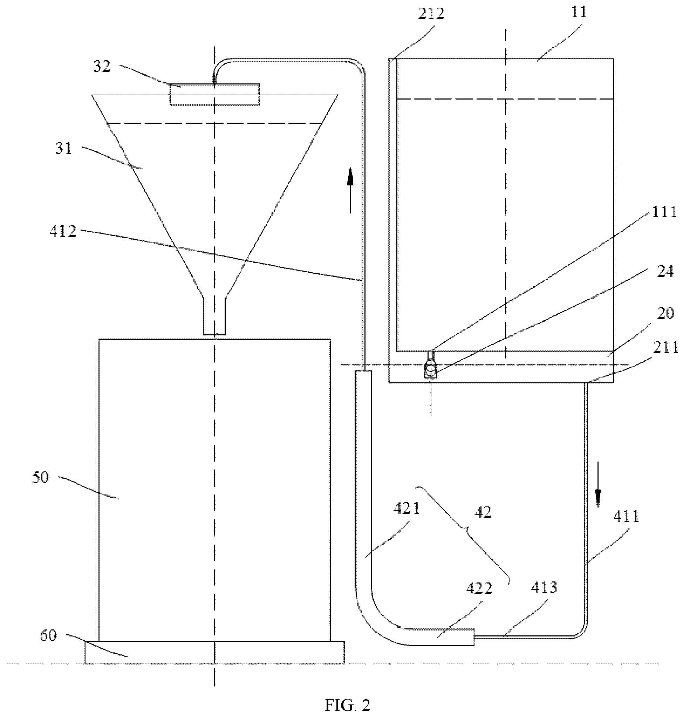

Referring to FIG. 2, in an embodiment, the pipeline 41 has a pipeline portion in which the internal liquid flows upward, and the heat element 42 is at least arranged on the pipeline portion. It can be understood that the pipeline 41 includes a first pipe segment 411 and a second pipe segment 412 both extending up and down and connected with each other. The first pipe segment 411 is connected to the first outlet 211, and the second pipe segment 412 is connected to the brewing module 30. The liquid in the second pipe segment 412 flows upward and flows to the brewing module 30. The first pipe segment 411 and the second pipe segment 412 can be directly connected or connected through other pipe segments, which is not limited here; and the heat element 42 includes a first heat element 421 arranged in the second pipe segment 412. In this way, after heating for a certain period of time, the water in the second pipe segment 412 is heated to generate steam pressure, and the steam pressure mainly acts on the water flow in the second pipe segment 412, so that the water flows into the powder bin 31 of the brewing module 30, effectively preventing the water in the pipeline 41 from flowing back due to the steam pressure, and preventing the steam pressure from acting on the first outlet 211, or acting on the outlet of the one-way valve, affecting the stable outflow of water in the liquid level stabilization module 20 or the water tank 11. That is, when the liquid level in the liquid level stabilization module 20 is shallow and the pressure is small, the one-way valve or the first outlet 211 is blocked in reverse, which will cause the water in the liquid level stabilization module 20 to be unable to flow into the pipeline 41, and the water in the water tank 11 to be unable to flow into the liquid level stabilization module 20. It is convenient for the water in the water tank 11 to flow out, reduce the possibility of dry burning, improve the safety of use, and at the same time, ensure the stability of the flow rate of the water flow in the pipeline 41, and extend the heating time of the water flow in the pipeline 41.

Furthermore, in an embodiment, the pipeline 41 also includes a third pipe segment 413, and the third pipe segment 413 is connected to the first pipe segment 411 and the second pipe segment 412; the heat element 42 also includes a second heat element 422, and the second heat element 422 is arranged in the third pipe segment 413 and is arranged away from the first pipe segment 411. The third pipe segment 413 can extend in a straight line or in a winding manner, so that the second heat element 422 extends along the specific shape of the third pipe segment 413. Such an arrangement can increase the length of the pipeline 41 that can generate heat, that is, the heating length of the first heat element 421 and the second heat element 422, increase the area of water heated in the pipeline 41, and increase the amount of hot water formed. At the same time, the second heat element 422 is arranged away from the first pipe segment 411, which effectively avoids a large amount of steam pressure from flowing to the first pipe segment 411 through the third pipe segment 413, thereby reducing the impact on the stable outflow of water in the liquid level stabilization module 20. However, the present application is not limited thereto. in an embodiment, the pipeline 41 only includes a first pipe segment 411 and a second pipe segment 412, and the first pipe segment 411 and the second pipe segment 412 are connected and approximately in a V-shaped structure. In another embodiment, the pipeline 41 includes a first pipe segment 411, a second pipe segment 412 and a third pipe segment 413, and the second pipe segment 412 is provided with a first heat element 421.

In an embodiment, the heat element 42 is arranged in an L-shape. The first heat element 421 and the second heat element 422 are arranged in one piece, reducing the assembly process, and avoiding the generation of a gap between the first heat element 421 and the second heat element 422, resulting in the water flow in the pipeline 41 corresponding to the gap not being effectively heated, and reducing the influence of the water flow on the temperature of the water flow heated by the first heat element 421 and the second heat element 422.

The above description is only an optional embodiment of the present application, and does not limit the patent scope of the present application. All equivalent structural changes made by using the contents of the present application specification and drawings under the inventive concept of the present application, or directly/indirectly applied in other related technical fields, are included in the patent scope of the present application.

## Claims

1. A coffee machine, **characterized by**:
a water tank (11) provided with a water tank outlet (10);
a liquid level stabilization module (20) comprising a shell (21) and a float assembly (24), wherein:
the shell (21) is arranged at the water tank outlet (10) and provided with a first outlet (211) and a second outlet (212),
the second outlet (212) is communicated with an external environment, and
the float assembly (24) is configured to open or close the water tank outlet (10);
a brewing module (30) and a pipeline (41), wherein the pipeline (41) is communicated with the first outlet (211) and the brewing module (30); and
a heat element (42) arranged in the pipeline (41).

2. The coffee machine according to claim 1, wherein:
the float assembly (24) comprises a float body (241);
the float body (241) is arranged in the shell (21); and
under an action of buoyancy, the float body (241) has a first state of being close to the water tank outlet (10) and blocking the water tank outlet (10), and a second state of being away from the water tank outlet (10) and opening the water tank outlet (10).

3. The coffee machine according to claim 2, wherein a guide structure (22) is arranged in the shell (21) to limit a movement trajectory of the float body (241).

4. The coffee machine according to claim 3, wherein:
the guide structure (22) is configured as a plurality of limit ribs (221); and
each of the limit ribs (221) is arranged at intervals around an axis of the water tank outlet (10) and configured to enclose and form a limit cavity for the float body (241) to float.

5. The coffee machine according to claim 4, wherein in a direction perpendicular to the axis of the water tank outlet (10), a gap width d between an outer surface of the float body (241) and a cavity wall of the limit cavity satisfies that: d is greater than or equal to 0.6mm and d is less than or equal to 1.5mm.

6. The coffee machine according to claim 2, wherein:
a maximum buoyancy value of the float body (241) is 2 to 5 times a deadweight of the float body (241); and/or
a ratio between a cross-segmental area of the shell (21) and a cross-segmental area of the float body (241) is s, and s is greater than or equal to 1.2 and s is less than or equal to 3.

7. The coffee machine according to claim 2, wherein:
the float assembly (24) further comprises a seal configured as a first seal (243) connected to a surface of the float body (241) facing the water tank outlet (10), so as to seal the water tank outlet (10) under the drive of the float body (241); and/or
the float assembly (24) further comprises a seal configured as a second seal connected to an edge of the water tank outlet (10), and in response to that the float body (241) blocks the water tank outlet (10), the second seal and the float body (241) are pressed relative to each other.

8. The coffee machine according to claim 7, wherein the seal is a silicone member.

9. The coffee machine according to claim 4, wherein:
an outer surface of the float body (241) is provided with at least one groove (242) or protrusion; and/or
a cross-segmental shape of the float body (241) is circular, rectangular or triangular.

10. The coffee machine according to claim 1, further comprising:
a water shortage detection device (70) provided on the water tank (11) and/or the liquid level stabilization module (20).

11. The coffee machine according to claim 10, wherein:
the water shortage detection device (70) comprises a detected member (71) and a detector
(72); the detected member (71) is connected to the float assembly (24); and
the detector (72) is connected to the shell (21) to feed back a position of the detected member (71) in the shell (21).

12. The coffee machine according to claim 11, wherein:
the float assembly (24) comprises a float body (241);
the float body (241) is arranged in the shell (21);
under an action of buoyancy, the float body (241) has a first state of being close to the water tank outlet (10) and blocking the water tank outlet (10), and a second state of being away from the water tank outlet (10) and opening the water tank outlet (10);
the detected member (71) is configured as a magnet arranged on the float body (241); and
the detector (72) is configured as a reed switch or a Hall sensor.

13. The coffee machine according to claim 1, wherein:
the water tank (11) is provided with an avoidance groove (242) for avoiding the pipeline (41);
a liquid level in the liquid level stabilization module (20) is higher than an upper end of the heat element (42); and/or
the second outlet (212) is located above the first outlet (211).

14. The coffee machine according to claim 1, further comprising:
a one-way valve arranged in the pipeline (41) and located between the liquid level stabilization module (20) and the heat element (42), wherein a conduction direction of the one-way valve is configured to be a direction from the liquid level stabilization module (20) to the pipeline (41).

15. The coffee machine according to claim 1, wherein:
the pipeline (41) is provided with a pipeline portion where internal liquid flows upward; and
the heat element (42) is at least arranged on the pipeline portion, and
wherein preferably, the heat element (42) is arranged in an L shape.
